# EUROPÄISCHE PATENTANMELDUNG

(11) **EP 2 327 341 A2**
(43) Veröffentlichungstag der Anmeldung: **01.06.2011**
(21) Anmeldenummer: 10168370.4
(22) Anmeldetag: 02.07.2010
(51) Int. Cl.: A47J 37/00

(54) **Kochgerät und insbesondere dafür vorgesehene(r) gelochte(r) GN-Behälter**

(30) Priorität: 06.07.2009 DE 102009026111
(71) Anmelder: Maier, Max, 71636 Ludwigsburg (DE)
(72) Erfinder: Maier, Max, 71636 Ludwigsburg (DE)
(74) Vertreter: Menges, Rolf

(57) **Zusammenfassung**

Beschrieben ist ein Kochgerät (160) mit einem Geräteträger (162) zur Aufnahme von wenigstens einem Gastronorm(GN)-Speisenbehälter und mit wenigstens einer Heizeinrichtung in GN-Maß, die in den Geräteträger (162) eingesetzt ist. Die Heizeinrichtung ist ein durch wenigstens einen GN-Behälter (22a, 22b) mit gelochtem Boden gebildeter Kohlerost zur Aufnahme von Holzkohle, über dem auf den Geräteträger (162) ein Grillrost (74') aufgesetzt ist und unter dem in dem Geräteträger (162) eine durch wenigstens einen GN-Behälter mit gelochter Seitenwand (180) gebildete Ascheauffangschale (178) eingesetzt ist. Das Kochgerät (160) stellt dadurch einen Holzkohlegrill im GN-Format dar, bei dem die übliche elektrische Heizeinrichtung durch zwei neu geschaffene GN-Behälter (72; 178) mit gelochtem Boden bzw. gelochter Seitenwand (180) ersetzt ist.

## Beschreibung

Die Erfindung betrifft ein Kochgerät der im Oberbegriff des unabhängigen Patentanspruchs 1 angegebenen Art. Außerdem betrifft die Erfindung einen GN-Behälter der im Oberbegriff der Patentansprüche 14 und 15 angegebenen Art.

Wenn bei der Speisenzubereitung Gastronorm(GN)-Speisenbehälter eingesetzt werden, d.h. Behälter, deren Maße durch das Gastro-Norm-Modulsystem nach DIN EN 631 oder DIN 66075 festgelegt sind, ist es üblich, einen Geräteträger zu verwenden, in dem wenigstens eine als Einsatz- oder Einschubgerät konzipierte Heiz- oder Kühleinrichtung mit GN-Maß angeordnet wird, mit der der GN-Behälter beheizt oder gekühlt wird. Die Heizeinrichtung kann als Warmhalteplatte, Kochplatte, Induktionskochfeld, WOK, Grillplatte, Pasta-Cooker, Pizza-Ofen, Friteuse, Dampfgargerät oder Backofen ausgebildet sein. Ein Kochzentrum mit Warm- und/oder Kaltausgabe, das wenigstens einen solchen Geräteträger aufweist, ist aus der DE 197 57 004 C2, Fig. 7, bekannt. Im Feld lassen sich mehrere solche Geräteträger nebeneinander aufbauen, die auf die jeweils von ihnen zu erfüllende Funktion abgestimmt sind und so das Backen, Grillen, Warmhalten, Kühlen od. dgl. ermöglichen. Dem Koch steht also ein vollständiges System zur Verfügung, das allen Bedürfnissen gerecht wird, dafür allerdings jeweils einen Stromanschluss braucht.

Der Koch hat aber die Möglichkeit, das Kochgerät im Feld auch ohne Stromanschluss zu betreiben, um Speisen warm- oder kühlzuhalten. Dafür kann er in den Geräteträger statt der Heizeinrichtung zum Warmhalten ein passives Wärmepellet oder zum Kühlhalten ein passives Kühlpellet einschieben. Der Koch hat aber nicht die Möglichkeit, im Feld ohne Stromanschluss auch zu kochen. Gegenstand einer noch nicht veröffentlichten deutschen Patentanmeldung (10 2009 009 842.9) des Anmelders vom 20.02.2009 ist eine Kochplatte mit einem Kochfeld mit einer elektrischen Heizeinrichtung und einer Steuerschaltung zum Beeinflussen wenigstens der Heizleistung der Kochplatte wenigstens in Abhängigkeit von der Art der Speise, die sich in einem auf die Kochplatte zu stellenden GN-Speisenbehälter befindet. Das Kochfeld der Kochplatte nach diesem älteren Vorschlag kann seine Funktion nicht erfüllen, wenn kein Stromanschluss verfügbar ist. Darüber hinaus ist bei dieser bekannten Kochplatte ohne Stromanschluss auch kein Warmhalten möglich. Die Möglichkeit zum Kühlhalten bietet diese Kochplatte ohnehin nicht.

Aufgabe der Erfindung ist es, die oben geschilderten Nachteile zu beseitigen, insbesondere dem Koch die Möglichkeit zu bieten, mit einem Kochgerät der eingangs genannten Art auch ohne Stromanschluss kochen zu können, ohne dafür den Einsatz des Gastro-Norm-Modulsystems aufgeben zu müssen. Außerdem sollen zur Verwendung bei einem solchen Kochgerät ausgebildete GN-Behälter geschaffen werden.

Diese Aufgabe ist erfindungsgemäß durch ein Kochgerät mit den im kennzeichnenden Teil des unabhängigen Patentanspruchs 1 und durch GN-Behälter mit den in den Ansprüchen 14 und/oder 15 angegebenen Merkmalen gelöst.

Das Kochgerät nach der Erfindung ermöglicht Grillen im GN-Format und stellt einen Holzkohlegrill im GN-Format dar, mit dem unabhängig von einem Stromanschluss gekocht und insbesondere gegrillt werden kann. Zusammen mit dem Einsatz von Wärme- und Kühlpellets mit GN-Maß steht dem Koch somit ein vollständiges System im GN-Format zur Verfügung, mit dem er im Feld, beispielshalber an einem Gewässer oder auf einer Wiese, Speisen zubereiten sowie warm- und kühlhalten kann. Der Aufbau der Heizeinrichtung des Kochgerätes nach der Erfindung umfasst den Einsatz von neuen, besonders ausgebildeten GN-Behältern als Kohlerost und als Ascheauffangschale. Diese GN-Behälter machen es möglich, bei einem auf den Einsatz von elektrischem Strom konzipierten Kochgerät die Beheizung von elektrisch auf Holzkohle umzustellen.

Vorteilhafte Ausgestaltungen der Erfindung bilden die Gegenstände der abhängigen Patentansprüche.

In einer Ausgestaltung des Kochgerätes nach der Erfindung ist der GN-Grillrost oder Grillrost mit wenigstens einem Handgriff versehen. Roste aus rostfreiem Stahl in GN-Maß sind zwar bekannt und werden zusammen mit GN-Speisenbehältern eingesetzt, jedoch hauptsächlich um Einschieben in Schränke in GN-Maß. Als Grillroste sind solche bekannten Roste bislang nicht eingesetzt worden, zumindest nicht in GN-Maß. Der Handgriff erleichtert die Handhabung des GN-Grillrostes.

In einer weiteren Ausgestaltung des Kochgerätes nach der Erfindung ist der GN-Grillrost wenigstens teilweise durch wenigstens einen weiteren GN-Speisenbehälter ersetzt. Dadurch kann wie im Falle eines herkömmlichen Elektrogrills auf dem Kochgerät nach der Erfindung gleichzeitig auf dem Grillrost gerillt und in dem wenigstens einen weiteren GN-Speisenbehälter, dessen Boden neben dem Grillrost angeordnet ist, gegrillt, gebraten oder warm gehalten werden. Dieser wenigstens eine weitere GN-Speisenbehälter ist so ein integrierter Teil des Kochgeräts nach der Erfindung.

In einer weiteren Ausgestaltung des Kochgerätes nach der Erfindung besteht der wenigstens eine weitere GN-Speisenbehälter aus einem metallischen Mehrschichtmaterial, ist also beispielshalber ein im Handel unter der eingetragenen Marke thermoplate erhältlicher Behälter. Derartiges Mehrschichtmaterial ist bekannt, z. B. aus der EP 0 672 520 B1.

In einer weiteren Ausgestaltung des Kochgerätes nach der Erfindung umfasst der Geräteträger ein kastenartiges Gehäuse, in das von einer offenen Stirnseite aus der Grillrost in GN-Maß, der den Kohlerost bildende GN-Behälter mit gelochtem Boden und die Ascheauffangschale auf Tragelemente einschiebbar oder eingeschoben sind. Der Holzkohlegrill erfordert also keinerlei Abwandlung des üblichen GN-Ports nach der oben bereits erwähnten DE 197 57 004 C2, der üblicherweise als Geräteträger eingesetzt wird, um diesen nun als Gehäuse des GN-Holzkohlegrills einsetzen zu können.

In einer weiteren Ausgestaltung des Kochgerätes nach der Erfindung sind die Tragelemente innen an dem Gehäuse ausgebildete oder angebrachte Tragleisten. Für den Grillrost, den den Kohlerost bildenden GN-Behälter mit gelochtem Boden und die Ascheauffangschale braucht somit an dem bestehenden Geräteträger nichts verändert zu werden.

In einer weiteren Ausgestaltung des Kochgerätes nach der Erfindung ist der Geräteträger als ein quaderförmiges, an den Seiten geschlossenes, mit einer oberen Öffnung versehenes Gehäuse ausgebildet, in das von oben her die Ascheauffangschale und der den Kohlerost bildende GN-Behälter mit gelochtem Boden einsetzbar oder eingesetzt sind sowie der Grillrost im GN-Maß einsetzbar oder eingesetzt ist oder auf das der Grillrost aufsetzbar oder aufgesetzt ist. In diesem Fall kann es sich um eine Kochplatte nach dem eingangs erwähnten älteren Vorschlag des Anmelders handeln, bei der aber das Kochfeld entfernt und durch den den Kohlerost bildenden GN-Behälter mit gelochtem Boden ersetzt worden ist.

In einer weiteren Ausgestaltung des Kochgerätes nach der Erfindung ist die obere Öffnung des Gehäuses (statt zur berührungslosen Aufnahme des wenigstens einen GN-Speisenbehälters) zur Aufnahme des Grillrostes in GN-Maß und des den Kohlerost bildenden GN-Behälters mit gelochtem Boden bemessen. Das bedeutet, dass der Grillrost in GN-Maß auch bei Einhandbedienung von dem Rand der Öffnung sicher gehalten wird, also nicht von dem Kochgerät herunter geschoben werden kann.

In einer weiteren Ausgestaltung des Kochgerätes nach der Erfindung ist die obere Öffnung des Gehäuses zur Aufnahme des den Kohlerost bildenden GN-Behälters mit gelochtem Boden bemessen oder weist das Gehäuse einen in der oberen Öffnung radial nach innen vorstehenden Sims als Tragelement für den den Kohlerost bildenden GN-Behälter mit gelochtem Boden auf. Bei der Kochplatte nach dem älteren Vorschlag ist der Sims das Tragelement für das Kochfeld.

In einer weiteren Ausgestaltung des Kochgerätes nach der Erfindung geht eine sich von dem Sims aus in Richtung axial von der oberen Öffnung weg nach unten erstreckende Seitenwand des Gehäuses in eine das Gehäuse unterhalb des Simses begrenzende Bodenwand über. Dadurch wird unterhalb des den Kohlerost bildenden GN-Behälters innerhalb des Gehäuses eine Möglichkeit zur sicheren Lagerung der Ascheauffangschale geschaffen.

In einer weiteren Ausgestaltung des Kochgerätes nach der Erfindung ist die Bodenwand doppelwandig ausgebildet und weist auf ihrer dem Sims benachbarten oberen Seite sowie auf ihrer von der Seitenwand gebildeten Seite Luftschlitze auf. Damit ist eine ausreichende Luftzufuhr zu der Holzkohle auf dem Kohlerost gewährleistet, um diese am Glühen zu halten.

In einer weiteren Ausgestaltung des Kochgerätes nach der Erfindung ist der Bodenwand wenigstens ein Schieber zum wahlweisen Öffnen und Schließen wenigstens eines Teils der Luftschlitze zugeordnet. Das eröffnet die Möglichkeit, die Luftzufuhr des Holzkohlegrills regulieren zu können.

In einer weiteren Ausgestaltung des Kochgerätes nach der Erfindung ist in der Bodenwand eine untere Öffnung gebildet zur Aufnahme von wenigstens einer durch wenigstens einen GN-Behälter mit gelochter Seitenwand gebildete Ascheauffangschale. Die Bodenwand kann so zur Lagerung der Ascheauffangschale benutzt werden und in dem durch die Seitenwand begrenzten Raum des Gehäuses kommt es zu einer Verstärkung des Luftstroms, was zur Verbesserung der Heizleistung des Kochgerätes beiträgt.

Außerdem schafft die Erfindung einen GN-Behälter zur Verwendung als Kohlerost bei einem Kochgerät nach der Erfindung, wobei der GN-Behälter einen gelochten Boden hat und emailliert ist.

Ferner schafft die Erfindung einen GN-Behälter zur Verwendung als Ascheauffangschale bei einem Kochgerät nach der Erfindung, wobei der GN-Behälter mit einer gelochten Seitenwand versehen ist.

Die Erfindung beinhaltet somit auch die Schaffung von zwei völlig neuen GN-Behältern, nämlich den GN-Behälter mit gelochtem Boden, der zusätzlich emailliert ist, und den GN-Behälter mit gelochter Seitenwand. Der gelochte Boden des GN-Behälters nach der Erfindung hat weniger und größere Löcher als ein üblicher GN-Speisenbehälter mit gelochtem Boden, wie er zum Beispiel zum Herrichten von Salat oder zum Waschen von Obst eingesetzt wird. Auch die gelochte Seitenwand des anderen GN-Behälters nach der Erfindung hat große Löcher, damit Luft ungehindert zu der Holzkohle auf dem Kohlerost strömen kann. Durch die Emaillierung wird die Lebensdauer des Kohlerostes verlängert und diesem ein entsprechendes Aussehen bewahrt, weil das Email die Anlauffarben des üblicherweise für diesen GN-Behälter verwendeten rostfreien Stahls verdeckt.

Ausführungsbeispiele der Erfindung werden im Folgenden unter Bezugnahme auf die Zeichnungen näher beschrieben. Es zeigt
- Fig. 1: in perspektivischer Darstellung eine erste Ausführungsform eines Kochgerätes nach der Erfindung,
- Fig. 2: das Kochgerät nach Fig. 1 in auseinander gezogener Darstellung,
- Fig. 3: das Kochgerät nach Fig. 1, bei welchem ein Teil des Grillrostes durch einen GN-Speisenbehälter ersetzt ist,
- Fig. 4: das Kochgerät nach Fig. 3 in auseinander gezogener Darstellung,
- Fig. 5: in perspektivischer Darstellung eine zweite Ausführungsform des Kochgerätes nach der Erfindung,
- Fig. 6: das Kochgerät nach Fig. 5 in auseinander gezogener Darstellung,
- Fig. 7: in perspektivischer Darstellung eine dritte Ausführungsform des Kochgerätes nach der Erfindung,
- Fig. 8: das Kochgerät nach Fig. 7 in auseinandergezogener Darstellung,
- Fig. 9a: eine Seitenansicht des Kochgerätes in Richtung eines Pfeils IXa in Fig. 7,
- Fig. 9b: eine Schnittansicht des Kochgerätes nach der Linie IXb-IXb in Fig. 7,
- Fig. 10a: ein bekanntes Kochgerät in einer gleichen Seitenansicht wie das erfindungsgemäße Kochgerät in Fig. 9a und
- Fig. 10b: das bekannte Kochgerät nach Fig. 10a in einer gleichen Schnitt- ansicht wie das erfindungsgemäße Kochgerät in Fig. 9b.

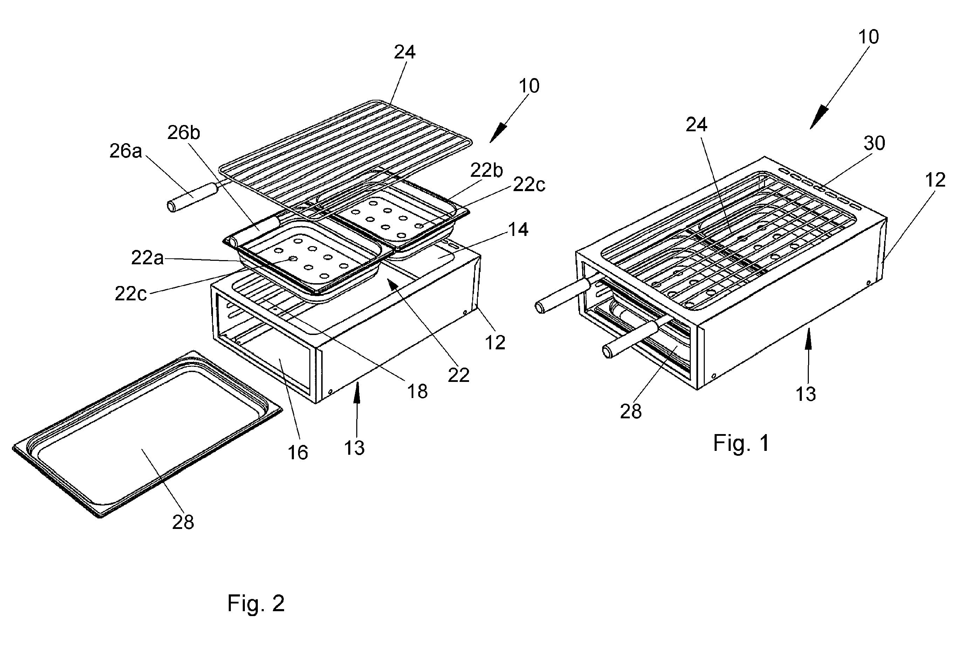

Die Fig. 1 und 2 zeigen in perspektivischer Darstellung bzw. in auseinander gezogener Darstellung eine erste Ausführungsform eines insgesamt mit 10 bezeichneten Kochgerätes nach der Erfindung. Das Kochgerät 10 umfasst einen Geräteträger 12 mit einer oberen Öffnung 14, die so bemessen ist, dass in sie ein Gastronorm(GN)-Speisenbehälter der GN-Größe 1/1 eingehängt werden könnte. Der Geräteträger 12 umfasst ein kastenartiges Gehäuse 13, in das von einer offenen Stirnseite 16 aus eine Heizeinrichtung in GN-Maß in wählbarer Höhe auf Tragelementen 18 einschiebbar ist. Wenn das Gehäuse 13 wie in dem hier dargestellten Ausführungsbeispiel aus rostfreiem Stahlblech besteht, sind die Tragelemente 18 als Tragleisten in dem Stahlblech ausgebildet, die durch Sicken gebildet sind. Der Geräteträger 12 ist an der offenen Stirnseite 16 durch eine Frontklappe verschließbar, die nicht dargestellt ist, weil sie in dem dargestellten Ausführungsbeispiel nicht unerlässlich ist. Das hier dargestellte und beschriebene Kochgerät 10 ist, wie eingangs bereits erwähnt, ein Holzkohlegrill im GN-Format. Deshalb ist die im Stand der Technik üblicherweise verwendete elektrische Heizeinrichtung durch einen Kohlerost zur Aufnahme von glühender Holzkohle (nicht dargestellt) ersetzt, der hier durch zwei GN-Behälter 22a, 22b mit gelochtem Boden gebildet wird. Gelochte GN-Speisenbehälter sind zwar bereits bekannt, diese haben jedoch eine Vielzahl von kleinen Löchern, die als Wasseraustrittslöcher und/oder Dampfdurchtrittslöcher fungieren. Hingegen haben die GN-Behälter 22a, 22b mit gelochtem Boden jeweils drei Reihen von vier oder fünf relativ großen Löchern 22c, die als Luftzirkulationslöcher und Ascheaustrittslöcher fungieren. Die GN-Behälter 22a, 22b haben jeweils die GN-Größe 1/2. Sie werden auf die beiden in den Fig. 1 und 2 mittleren Tragelemente 18 eingeschoben, wie es Fig. 1 zeigt. Im Unterschied zu herkömmlichen gelochten GN-Speisenbehältern sind die GN-Behälter 22a, 22b mit gelochtem Boden emailliert.

Bei den GN-Behältern 22a, 22b mit gelochtem Boden hat eine angenommene Einheitsfläche von 10 cm x 10 cm neun Löcher mit einem Durchmesser von jeweils 10 mm. Ein gelochter GN-Speisenbehälter, der für die vorgenannten Zwecke eingesetzt wird, hat auf der gleichen Einheitsfläche zirka einhundert Löcher mit einem Durchmesser von jeweils etwa 4 mm.

Über den GN-Behältern 22a, 22b mit gelochtem Boden wird in den Geräteträger 12 auf den beiden obersten Tragelementen 18 ein GN-Grillrost 24 eingeschoben, der mit zwei Handgriffen 26a, 26b versehen ist. Fig. 1 zeigt den GN-Grillrost 24 eingeschoben in den Geräteträger 12. Der GN-Grillrost 24 hat die GN-Größe 1/1.

Schließlich ist von der offenen Stirnseite 16 aus in den Geräteträger 12 auf den unteren beiden Tragelementen 18 eine durch wenigstens einen GN-Speisenbehälter gebildete Ascheauffangschale 28 eingeschoben. Die Ascheauffangschale 28 hat die GN-Größe 1/1 und besteht aus rostfreiem Stahlblech. Der Geräteträger 12 ist am Boden offen oder geschlossen und hat wenigstens auf zwei Seiten seiner Bodenöffnung oder seines Bodens Auflagen für die Ascheauffangschale 28. In Fig. 1 ist die Ascheauffangschale 28 eingeschoben in den Geräteträger 12 gezeigt.

Der Geräteträger 12 hat in seinem zu der Stirnseite 16 entgegengesetzten oberen Rand mehrere Öffnungen 30 für die Luftzirkulation.

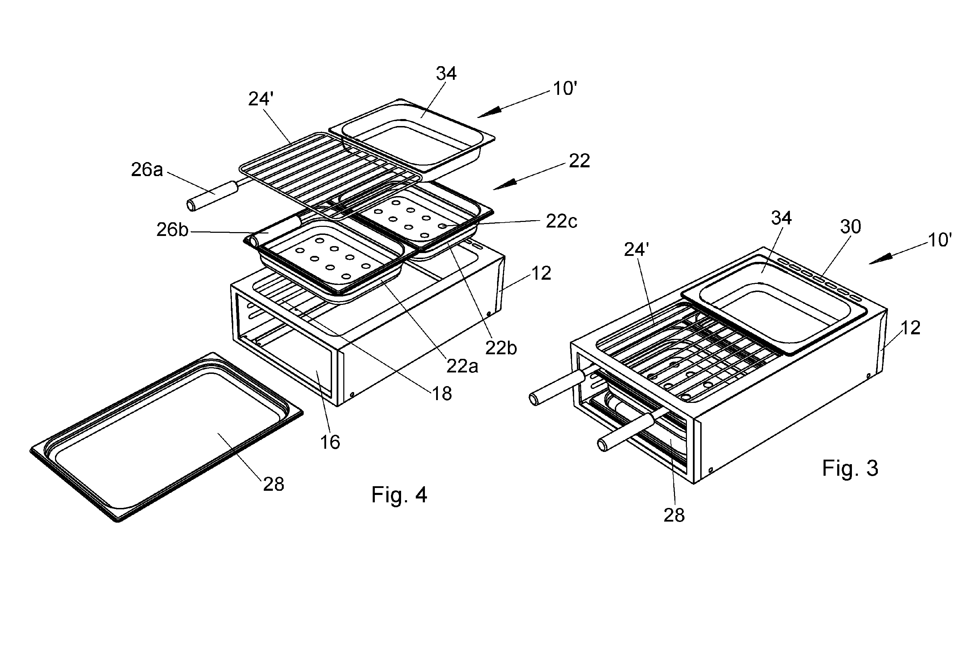

Die Fig. 3 und 4 zeigen eine mit 10' bezeichnete zweite Ausführungsform des Kochgerätes nach der Erfindung, bei welchem ein Teil des GN-Grillrostes 24 durch einen GN-Speisenbehälter 34 ersetzt ist. Der GN-Speisenbehälter 34 wird in die obere Öffnung 14 des Geräteträgers 12 eingehängt, wie es in Fig. 3 gezeigt ist. Der GN-Speisenbehälter 34 hat die GN-Größe 1/2. Anschließend wird der verbliebene kleinere GN-Grillrost 24', der die GN-Größe 1/2 hat, in den Geräteträger 12 eingeschoben, wie es in Fig. 3 gezeigt ist. Im Übrigen stimmt der Aufbau der zweiten Ausführungsform des Kochgerätes 10 mit dem Aufbau der ersten Ausführungsform nach den Fig. 1 und 2 überein, trägt deshalb die gleichen Bezugszeichen und braucht zur Vermeidung von Wiederholungen nicht weiter beschrieben zu werden.

Im Betrieb des Kochgerätes 10 oder 10' werden die GN-Behälter 22a, 22b mit gelochtem Boden (statt zwei solchen GN-Behältern der Größe 1/2 könnte auch ein einzelner gelochter GN-Behälter der Größe GN 1/1 verwendet werden) mit glühender Holzkohle befüllt, die zuvor in einem besonderen Anzündzylinder, wie er üblicherweise bei dem bekannten Weber-Kugelgrill eingesetzt wird, zum Glühen gebracht worden ist. Anschließend werden der GN-Grillrost 24 und die Ascheauffangschale 28 oder der GN-Speisenbehälter 34 und der GN-Grillrost 24' und die Ascheauffangschale 28 in den Geräteträger 12 eingeschoben. Der Grillrost 24' könnte auch durch einen weiteren GN-Speisenbehälter wie den GN-Speisenbehälter 34 ersetzt werden, so dass das Kochgerät statt des Grillrostes 24 oder 24' zwei nebeneinander in die obere Öffnung 14 des Geräteträgers 12 eingehängte flache GN-Speisenbehälter 34 aufweisen würde, deren Böden jeweils eine Fläche zum Grillen oder Braten bilden würden.

Der oder jeder GN-Speisenbehälter 34 besteht aus einem metallischen Mehrschichtmaterial und ist üblicherweise ein thermoplate-Behälter der eingangs erwähnten Art. Er hat eine besonders gute Wärmeleitfähigkeit, so dass ein solcher Behälter an allen Stellen quasi die gleiche Temperatur aufweist. Das ist für die Speisenzubereitung in einem solchen Behälter sehr günstig, weil heiße Punkte, an denen Grill-, Gar- oder Backgut anbrennen könnte, vermieden werden. Der oder jeder Speisenbehälter 34 ist darüber hinaus insbesondere mit einer glasartigen Beschichtung überzogen, die frei von Teflonanteilen ist und bis 400°C dauerhaft temperaturbeständig ist. Die Beschichtung hat eine besondere Oberflächenhärte, so dass sie durch Metallgegenstände nicht beschädigt wird. Zum Reinigen können daher übliche Reinigungsmittel mit Reinigungsschwämmen eingesetzt werden.

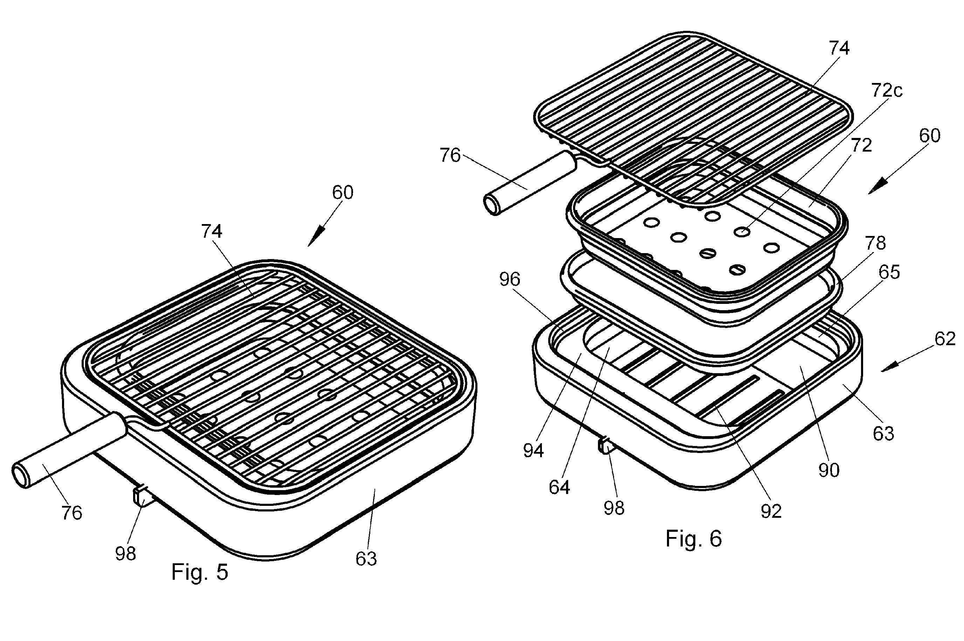

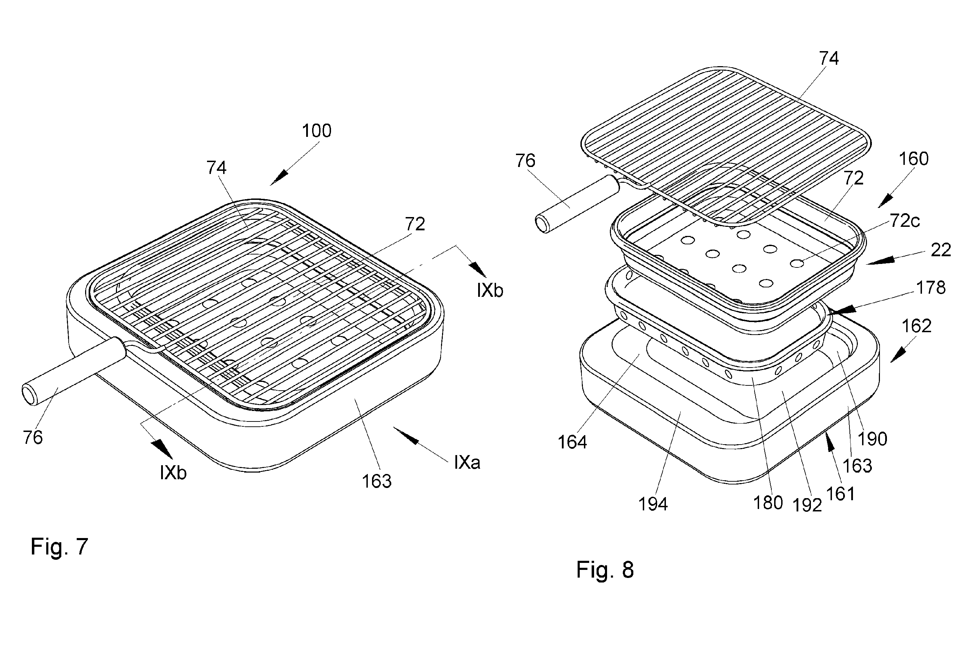

Die Fig. 5 und 6 zeigen in perspektivischer Darstellung bzw. in auseinandergezogener Darstellung eine insgesamt mit 60 bezeichnete zweite Ausführungsform des Kochgerätes nach der Erfindung. Ein Geräteträger 62 des Kochgerätes 60 ist ein quaderförmiges, nur oben offenes Gehäuse 63, in dessen obere Öffnung 64 von oben her eine Ascheauffangschale 78, ein aus einem GN-Behälter 72 mit Löchern 72c im Boden bestehender Kohlerost und darüber ein GN-Grillrost 74, der einen Handgriff 76 aufweist, eingesetzt sind. Eine Besonderheit ist, dass das den Geräteträger 62 bildende Gehäuse 63 in Draufsicht stark abgerundete Ecken hat, deren Radius jeweils dem Rundungsradius r nach EN 631-2 entspricht. Das Gehäuse 63 ist so dem GN-Format auf Material sparendste Weise angepasst. Die bei dem Kochgerät 60 verwendete Ascheauffangschale 78 ist wie bei dem Kochgerät 10 durch einen flachen GN-Behälter gebildet. Die Seite des die Ascheauffangschale 78 bildenden GN-Behälters kann gelocht sein wie bei den weiter unten beschriebenen Ausführungsformen nach den Fig. 7, 8 und 9a, 9b. Die Bemessung der Löcher 72c kann so erfolgen wie bei den oben beschriebenen Löchern 22c. Das Gehäuse 63 hat eine Bodenwand 90, die doppelwandig ausgebildet ist und auf ihrer der oberen Öffnung 64 benachbarten oberen Seite sowie auf ihrer von der Seitenwand gebildeten Seite Luftschlitze 92 aufweist. In Fig. 6 sind nur die Luftschlitze 92 in der Bodenwand 90 sichtbar.

Der GN-Grillrost 74 ist in die obere Öffnung 64 eingesetzt, wie es in Fig. 5 zu erkennen ist. Das Gehäuse 63 weist einen in der oberen Öffnung 64 radial nach innen vorstehenden Sims 94 als Tragelement für den gelochten GN-Behälter 72 auf, der den Kohlerost bildet. Die Ascheauffangschale 78 hat, wenn sie in das Gehäuse 63 eingesetzt ist, Abstand von der Bodenwand 90, um die Luftschlitze 92 nicht zu verschließen, und zwischen dem den Kohlerost bildenden gelochten GN-Behälter 72 und der Ascheauffangschale 78 wird ein Distanzstück (nicht dargestellt) angeordnet, damit Luft über den Rand der Ascheauffangschale 78 an die Unterseite des den Kohlerost bildenden gelochten GN-Behälters 72 und von dort durch dessen Löcher 72c nach oben in Richtung Kohle gelangen kann. Unmittelbar unterhalb des Randes der Öffnung 64 und mit Abstand oberhalb des Simses 94 hat der Geräteträger 62 eine Tragschulter 96 für den GN-Grillrost 74. Von der Oberseite des Gehäuses 63 und somit auch von dem Sims 94 aus erstreckt sich eine Seitenwand 63 des Gehäuses axial nach unten. Die Seitenwand 63 geht in die das Gehäuse 63 unterhalb des Simses 94 verschließende Bodenwand 90 über. Der Bodenwand 90 ist ein Schieber 98 zum wahlweisen Öffnen und Schließen wenigstens eines Teils der Luftschlitze 92 zugeordnet. Von dem Schieber 98 ist in Fig. 6 nur die Handhabe sichtbar. Das Gehäuse ist als ein Tiefziehteil hergestellt.

Die Arbeitsweise des Kochgerätes 60 gleicht der des Kochgerätes 10, mit dem Unterschied, dass zunächst die Ascheauffangschale 78 und anschließend der den Kohlerost bildende GN-Behälter 72 mit gelochtem Boden in den Geräteträger 62 eingesetzt werden, wobei der GN-Behälter 72 mit gelochtem Boden bereits glühende Kohle enthalten kann oder anschließend mit glühender Kohle befüllt wird, bevor zum Schluss der GN-Grillrost 74 in der oberen Öffnung 64 auf die Tragschulter 96 aufgelegt wird.

Die Fig. 7 und 8 zeigen in perspektivischer Darstellung bzw. in auseinandergezogener Darstellung eine insgesamt mit 160 bezeichnete dritte Ausführungsform des Kochgerätes nach der Erfindung. Ein Geräteträger 162 des Kochgerätes 160 ist ein quaderförmiges, oben und unten offenes Gehäuse 161 mit einer Seitenwand 163, in dessen obere Öffnung 164 von oben her eine Ascheauffangschale 178, der aus einem GN-Behälter 72 mit gelochtem Boden mit Löchern 72c bestehende Kohlerost 22 und darüber der GN-Grillrost 74, der den Handgriff 76 aufweist, eingesetzt sind. Das den Geräteträger 162 bildende Gehäuse 161 hat wie das Gehäuse 63 die in Draufsicht stark abgerundeten Ecken, deren Radius jeweils dem Rundungsradius r nach EN 631-2 entspricht. Auch das Gehäuse 161 ist so dem GN-Format angepasst. Die bei dem Kochgerät 160 verwendete Ascheauffangschale 178 ist wie bei dem Kochgerät 10 oder dem Kochgerät 60 durch einen flachen GN-Behälter gebildet, der aber hier bei dem Kochgerät 160 eine gelochte Seitenwand 180 aufweist. Das Gehäuse 161 hat eine Bodenwand 190 mit einer unteren Öffnung 192 zur Aufnahme der durch den GN-Behälter mit der gelochten Seitenwand 180 gebildeten Ascheauffangschale 178.

In eine obere Öffnung 164 des Gehäuses 161 ist gemäß Fig. 7 der GN-Grillrost 74 eingesetzt. Das Gehäuse 161 hat einen in der oberen Öffnung 164 radial nach innen vorstehenden Sims 194 als Tragelement für den GN-Behälter 72 mit gelochtem Boden, der den Kohlerost bildet. Wenn die Ascheauffangschale 178 in das Gehäuse 161 eingesetzt ist, sitzt sie in der unteren Öffnung 192 des Gehäuses und liegt dabei mit ihrem umlaufenden oberen Rand auf der Bodenwand 190 auf. Unterhalb der Bodenwand 190 ist genügend Abstand, so dass die eingesetzte Ascheauffangschale 178 nicht mit einer unter dem Kochgerät 100 befindlichen Tischplatte od. dgl. in Berührung kommen kann. Die in der Seitenwand 165 gebildeten Löcher sind in ihrer Anzahl und in ihrer Größe so bemessen, dass bei eingesetzter Ascheauffangschale 178 für eine ausreichende Luftzufuhr in das Kochgerät 100 gesorgt ist.

Gleiche Teile wie bei der zweiten Ausführungsform nach den Fig. 5 und 6 sind in den Fig. 7 und 8 mit gleichen Bezugszahlen versehen. Die Beschreibung dieser Teile mit Bezug auf die Fig. 5 und 6 gilt somit auch als Beschreibung dieser Teile nach den Fig. 7 und 8 und braucht daher nicht wiederholt zu werden. Von der Oberseite des Gehäuses 161 und somit auch von dem Sims 194 aus erstreckt sich eine Seitenwand 163 des Gehäuses axial nach unten. Die Seitenwand 163 geht in die das Gehäuse 161 unterhalb des Simses 194 begrenzende Bodenwand 190 über oder trägt die von ihr aus nach innen vorstehende Bodenwand 190. In der Bodenwand 190 ist die untere Öffnung 192 des Gehäuses 161 gebildet zur Aufnahme der durch den GN-Speisenbehälter 72 mit der gelochten Seitenwand 180 gebildeten Ascheauffangschale 178.

Die Arbeitsweise des Kochgerätes 160 gleicht der des Kochgerätes 60, mit dem Unterschied, dass zunächst die Ascheauffangschale 178 in die untere Öffnung 192 der Bodenwand 190 eingesetzt wird und dass anschließend der den Kohlerost bildende GN-Behälter 72 mit gelochtem Boden in den Geräteträger 162 eingesetzt wird, wobei der GN-Behälter 72 mit gelochtem Boden bereits glühende Kohle enthalten kann oder anschließend mit glühender Kohle befüllt wird, bevor zum Schluss der GN-Grillrost 74 in die obere Öffnung 64 des Gehäuses 161 eingesetzt wird.

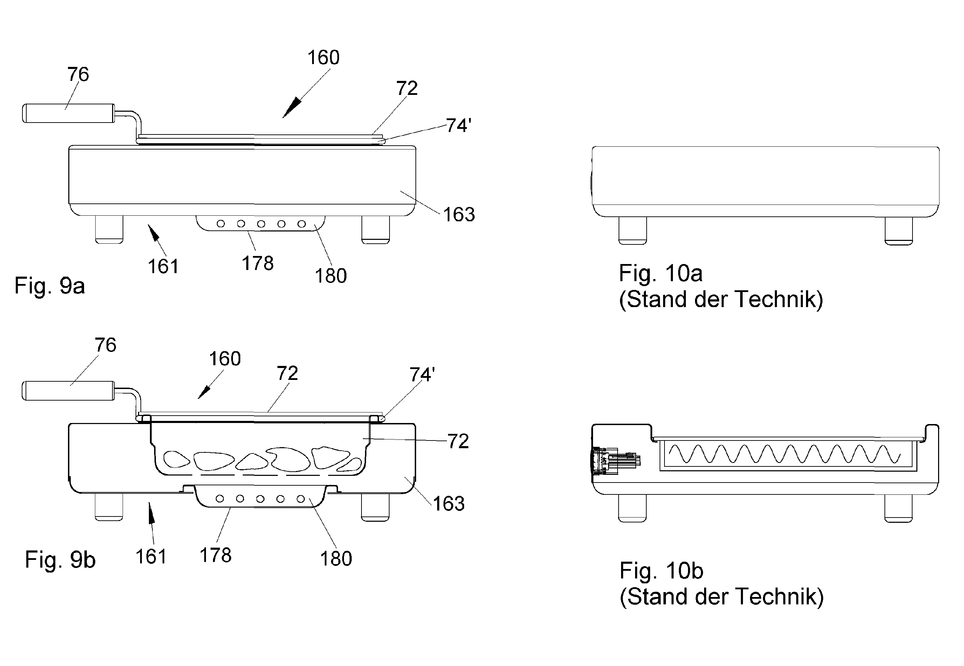

Die Fig. 9a und 9b zeigen das Kochgerät 163 nach Fig. 7, und zwar in Fig. 9a in einer Seitenansicht in Richtung eines Pfeils IXa in Fig. 7 und in Fig. 9b im Schnitt nach der Linie IXb-IXb in Fig. 7. Zusätzlich ist in den Fig. 9a und 9b aber auch eine weitere Variante des Kochgerätes 163 gezeigt, nämlich der Fall, in welchem die obere Öffnung 164 des Gehäuses 161 zur Aufnahme des den Kohlerost bildenden GN-Behälters 72 mit gelochtem Boden bemessen ist. Der GN-Behälter 72 mit gelochtem Boden sitzt in diesem Fall mit der Unterseite seines oberen Randes auf der Oberseite des Gehäuses 161 auf, wie es in den Fig. 9a und 9b zu erkennen ist. Ein Grillrost 74' ist so bemessen, dass er auf dem oberen Rand des GN-Behälters 72 mit gelochtem Boden aufgesetzt werden kann, um diesen zu übergreifen, wie es in den Fig. 9a und 9b zu erkennen ist. Der Grillrost 74' ist deshalb kein GN-Grillrost, sondern ein Grillrost, der größer als ein GN-Grillrost bemessen ist, damit er den GN-Behälter 72 mit gelochtem Boden übergreifen kann. In den Fig. 9a, 9b ist weiter zu erkennen, dass die Löcher in der gelochten Seitenwand 180 so tief angeordnet sind, dass sie bei in das Gehäuse 161 eingesetzter Ascheauffangschale 178 unterhalb des Bodens des Gehäuses 161 freiliegen.

In den Fig. 10a, 10b ist in Seitenansicht und im Schnitt ein bekanntes Kochgerät gezeigt, welches mit einer elektrischen Heizeinrichtung versehen ist, bei der es sich hier um ein Cerankochfeld handeln kann. Ein Vergleich der Fig. 9a, 9b mit den Fig. 10a, 10b lässt ohne weiteres erkennen, dass das Kochgerät 160 nach den Fig. 9a, 9b einen Holzkohlegrill im GN-Format darstellt, bei dem die übliche elektrische Heizeinrichtung, die in Fig. 10b zu erkennen ist, durch die beiden neu geschaffenen GN-Behälter 72 und 178 mit gelochtem Boden bzw. gelochter Seitenwand 180 ersetzt worden ist.

### Bezugszeichenliste

- 10: Kochgerät
- 10': Kochgerät
- 12: Geräteträger
- 13: Gehäuse
- 14: Öffnung
- 16: Stirnseite
- 18: Tragelement
- 22: Kohlerost
- 22a: gelochter GN-Behälter
- 22b: gelochter GN-Behälter
- 22c: Loch
- 24: GN-Grillrost
- 24': GN-Grillrost
- 26a: Handgriff
- 26b: Handgriff
- 28: Ascheauffangschale
- 30: Öffnung
- 34: GN-Speisenbehälter
- 60: Kochgerät
- 62: Geräteträger
- 63: Gehäuse
- 64: Öffnung
- 65: Seitenwand
- 72: GN-Behälter mit gelochtem Boden
- 72c: Loch
- 74: GN-Grillrost
- 74': Grillrost
- 76: Handgriff
- 78: Ascheauffangschale
- 90: Bodenwand
- 92: Luftschlitz
- 94: Sims
- 96: Tragschulter
- 98: Schieber
- 160: Kochgerät
- 161: Gehäuse
- 162: Geräteträger
- 163: Seitenwand
- 164: obere Öffnung
- 178: Ascheauffangschale
- 180: gelochte Seitenwand
- 190: Bodenwand
- 192: untere Öffnung
- 194: Sims

## Patentansprüche

1. Kochgerät mit einem Geräteträger zur Aufnahme von wenigstens einem Gastronorm(GN)-Speisenbehälter und mit wenigstens einer Heizeinrichtung in GN-Maß, die in den Geräteträger einsetzbar oder eingesetzt ist, **dadurch gekennzeichnet, dass** die Heizeinrichtung ein durch wenigstens einen GN-Behälter (22a, 22b; 72) mit gelochtem Boden gebildeter Kohlerost (22) zur Aufnahme von Holzkohle ist, über dem ein Grillrost (24, 24'; 74) in GN-Maß in den Geräteträger (12; 62) eingesetzt oder einsetzbar oder ein Grillrost (74') auf den Geräteträger (162) aufsetzbar oder aufgesetzt ist und unter dem in dem Geräteträger (12; 62; 162) eine durch wenigstens einen GN-Behälter gebildete Ascheauffangschale (28; 78; 178) eingesetzt oder einsetzbar ist.

2. Kochgerät nach Anspruch 1, **dadurch gekennzeichnet, dass** der Grillrost (74') oder der Grillrost (24, 24'; 74) mit wenigstens einem Handgriff (26a, 26b; 76) versehen ist.

3. Kochgerät nach Anspruch 1 oder 2, **dadurch gekennzeichnet, dass** der GN-Grillrost (24') wenigstens teilweise durch wenigstens einen weiteren GN-Speisenbehälter (34) ersetzt ist.

4. Kochgerät nach Anspruch 3, **dadurch gekennzeichnet, dass** der weitere GN-Speisenbehälter (34) aus einem metallischen Mehrschichtmaterial besteht.

5. Kochgerät nach einem der vorhergehenden Ansprüche, **dadurch gekennzeichnet, dass** der Geräteträger (12) ein kastenartiges Gehäuse (13) umfasst, in das von einer offenen Stirnseite (16) aus der Grillrost (24) in GN-Maß, der den Kohlerost (22) bildende GN-Behälter mit gelochtem Boden und die Ascheauffangschale (28) auf Tragelemente (18) einschiebbar oder eingeschoben sind.

6. Kochgerät nach Anspruch 5, **dadurch gekennzeichnet, dass** die Tragelemente (18) innen an dem Gehäuse(13) ausgebildete oder angebrachte Tragleisten sind.

7. Kochgerät nach einem der Ansprüche 1 bis 4, **dadurch gekennzeichnet, dass** der Geräteträger (62; 162) als ein quaderförmiges, an den Seiten geschlossenes, mit einer oberen Öffnung (64; 164) versehenes Gehäuse (63; 161) ausgebildet ist, in das von oben her die Ascheauffangschale (78; 178) und der den Kohlerost (22) bildende GN-Behälter (72) mit gelochtem Boden einsetzbar oder eingesetzt sind sowie der Grillrost (74) in GN-Maß einsetzbar oder eingesetzt ist oder auf das der Grillrot (74') aufsetzbar oder aufgesetzt ist.

8. Kochgerät nach Anspruch 7, **dadurch gekennzeichnet, dass** die obere Öffnung (64; 164) des Gehäuses (63; 161) zur Aufnahme des Grillrostes (74) in GN-Maß und des den Kohlerost (22) bildenden GN-Behälters (72) mit gelochtem Boden bemessen ist.

9. Kochgerät nach Anspruch 7 oder 8, **dadurch gekennzeichnet, dass** die obere Öffnung des Gehäuses (161) zur Aufnahme des den Kohlerost (22) bildenden GN-Behälters (72) mit gelochtem Boden bemessen ist oder dass das Gehäuse (63; 161) einen in der oberen Öffnung (64; 164) radial nach innen vorstehenden Sims (94; 194) als Tragelement für den den Kohlerost (22) bildenden GN-Behälter (72) mit gelochtem Boden aufweist.

10. Kochgerät nach Anspruch 9, **dadurch gekennzeichnet, dass** eine sich von dem Sims (94; 194) aus in Richtung axial von der oberen Öffnung (64, 164) weg nach unten erstreckende Seitenwand (65; 163) des Gehäuses (63; 161) in eine das Gehäuse (63; 161) unterhalb des Simses (94; 194) begrenzende Bodenwand (90; 190) übergeht.

11. Kochgerät nach Anspruch 10, **dadurch gekennzeichnet, dass** die Bodenwand (90) doppelwandig ausgebildet ist und auf ihrer dem Sims (94) benachbarten oberen Seite sowie auf ihrer von der Seitenwand (65) gebildeten Seite Luftschlitze (92) aufweist.

12. Kochgerät nach Anspruch 11, **gekennzeichnet durch** wenigstens einen der Bodenwand (90) zugeordneten Schieber (98) zum wahlweisen Öffnen und Schließen wenigstens eines Teils der Luftschlitze (92).

13. Kochgerät nach Anspruch 10, **gekennzeichnet durch** eine in der Bodenwand (190) gebildete untere Öffnung (192) zur Aufnahme von einer **durch** wenigsten einen GN-Behälter mit gelochter Seitenwand (180) gebildete Ascheauffangschale (178).

14. GN-Behälter zur Verwendung als Kohlerost bei einem Kochgerät nach Anspruch 1 oder 7, **dadurch gekennzeichnet, dass** der GN-Behälter (22a, 22b; 72) einen gelochten Boden hat und emailliert ist.

15. GN-Behälter zur Verwendung als Ascheauffangschale bei einem Kochgerät nach einem der Ansprüche 10 bis 12, **dadurch gekennzeichnet, dass** der GN-Behälter mit einer gelochten Seitenwand (180) versehen ist.
